**Europäisches Patentamt**

**European Patent Office**

**Office européen des brevets**

(11) Veröffentlichungsnummer: **0 048 832**
A2

# EUROPÄISCHE PATENTANMELDUNG

(21) Anmeldenummer: **81106771.9**

(22) Anmeldetag: **29.08.81**

(51) Int. Cl.³: **B 65 G 47/10**

(30) Priorität: **26.09.80 DE 3036293**

(43) Veröffentlichungstag der Anmeldung: **07.04.82**
**Patentblatt 82/14**

(84) Benannte Vertragsstaaten: **AT BE CH DE FR GB IT LI LU NL SE**

(71) Anmelder: **Ferd. Schulze & Co.,**
**Pfingstweidstrasse 10-12, D-6800 Mannheim 24 (DE)**

(72) Erfinder: **Weber, Otto, Kurpfalzstrasse 21,**
**D-6945 Hirschberg (DE)**
Erfinder: **Ohnsmann, Klaus, Leharstrasse 32,**
**D-6940 Weinheim (DE)**
Erfinder: **Christ, Ferdinand, Lindenstrasse 9,**
**D-6761 Weiterweiler (DE)**

(74) Vertreter: **Gudel, Diether Patentanwälte Dr. V.**
**Schmied-Kowarzik Dipl.-Ing. G. Dannenberg, Dr. P.**
**Weinhold, Dr. D. Gudel Dipl.-Ing. S. Schubert Grosse**
**Eschenheimer Strasse 39, D-6000 Frankfurt am**
**Main 1 (DE)**

(54) **Verfahren zum Zusammenstellen von Warensendungen und Kommissioniergerät zur Durchführung des Verfahrens.**

(57) Beschrieben wird ein Verfahren zum Zusammenstellen von Warensendungen aus in Vorratsbehältern in einem Hochregal aufbewahrten Artikeln mittels eines Kommissioniergerätes, das bei einer einzigen Hin- oder Hin- und Rückfahrt längs des Hochregals alle in diesem Hochregal befindlichen Artikel mehrerer Aufträge absammelt. Außerdem wird ein solches Kommissioniergerät beschrieben, das sich insbesondere durch mehrere Sammelbehälter auszeichnet.

0048832

## Beschreibung

Die Erfindung betrifft ein Verfahren zum Zusammenstellen von Warensendungen aus in Vorratsbehältern in einem Hochregal aufbewahrten Artikeln mittels eines in einem Gang vor dem Hochregal fahrbaren Regal-Kommissioniergerätes mit einem Arbeitsplatz, dessen von den zu entladenden oder aufzunehmenden Artikeln abhängige Positionierung im Gang und in der Höhenpositionierung des Arbeitsplatzes von einem mit entsprechenden Informationen versehenen Rechner gesteuert wird. Außerdem bzieht sich die Erfindung auf ein Kommissioniergerät zur Durchführung dieses Verfahrens.

Die Zeitschrift "fördern und heben", 26 (1976), Nr. 10, Seiten 1011-1015 beschreibt das Lagern und Kommissionieren in einem Verteilzentrum. Zum Kommissionieren der in Hochregalen gestapelten Artikel wird ein längs des Hochregals in einem Gang verfahrbares Regal-Kommissioniergerät eingesetzt, das von Hand gesteuert wird und dessen Arbeitsplatz in den Bereich des betreffenden Artikels (in der Längenkoordinate und in der Höhenkoordinate) gebracht wird, wo die gewünschte Anzahl des betreffenden Artikels von Hand eingesammelt wird. Dieses Verteilzentrum hat außerdem ein Zwischenlager, in dem betreffende Artikel auf Paletten, d.h. zu Großgebinden, in Hochregalen gelagert sind. Dieses Zwischenlager wird dort von einem Regal-Förderzeug bedient, dessen Arbeitsplatz von einem Rechner gesteuert wird. Wegen der Kompliziertheit der zu kommissionierenden Waren hat man es offenbar nicht gewagt, auch für das Kommissionieren der Artikel ein rechnergesteuertes Regal-Kommissioniergerät einzusetzen.

Die Zeitschrift "Mechanical Handling", Oktober 1965, Seiten 470-473 beschreibt ein Verfahren zum Zusammenstellen von Warensendungen, wobei ein Fördergerät für

- 2 -

jeden einzelnen Auftrag den Gang vor einem Hochregal abfährt. Nach dem Absammeln dieses einzigen Auftrags wird das Gerät entleert und fährt leer wieder in seine Ausgangslage zurück. Hierbei ist es also nicht möglich, mehrere Aufträge bei einer einzigen Fahrt des Förderzeugs abzusammeln, so daß auch dieses Verfahren sehr aufwendig und zeitraubend ist.

Der Erfindung liegt die Aufgabe zugrunde, ein Verfahren zum Zusammenstellen von Warensendungen aus in Vorratsbehältern in einem Hochregal aufbewahrten Artikeln mittels eines Regal-Kommissioniergerätes vorzuschlagen, das von einem Rechner in seiner Positionierung im Gang sowie in der Höhenpositionierung seines Arbeitsplatzes auftragsgebunden gesteuert wird, wobei das Verfahren so ausgestaltet werden soll, daß mehrere auftragsgebundene Warensendungen bei einer einzigen Fahrt des Geräts längs des Regals zusammengestellt werden können.

Ausgehend von einem Verfahren der eingangs genannten Art gelingt dies gemäß der Erfindung dadurch, daß das Regal-Kommissioniergerät bei einer einzigen Hin- oder Hin- und Rückfahrt längs des Hochregals alle in diesem Hochregal befindlichen Artikel mehrerer Aufträge absammelt, wobei die Steuerung des Geräts zusätzlich zur Gang- und Höhenpositionierung des Arbeitsplatzes des Gerätes jeweils einen von mehreren Sammelbehältern des Geräts auftragsgebunden an eine Beladeposition des Geräts bringt und die dadurch auftragsgebunden mit den Artikeln dieses Hochregals gefüllten Sammelbehälter nach Beendigung der Fahrt des Geräts durch den Gang in eine entsprechende Anzahl von ebenfalls auftragsgebunden befüllten Kommissionierbehältern entleert werden.

Der Rechner, dem alle wichtigen Daten über die abzusammelnden Aufträge eingegeben sind, steuert somit nicht nur die Position des Geräts im Gang und die Höhenlage des Arbeitsplatzes des Geräts, sondern gewissermaßen als dritte Dimension zusätzlich die Position der Sammelbehälter des Geräts derart, daß ein einem bestimmten Auftrag zugeordneter Sammelbehälter sich stets dann in der Beladeposition des Geräts befindet, wenn aus dem Hochregal ein zu diesem Auftrag gehörender Artikel in einer bestimmten Anzahl entnommen werden soll. Ist der betreffende Artikel auftragsgebunden in den betreffenden Sammelbehälter übergeben, so steuert der Rechner den nächst gelegenen Artikel dieses Hochregals an, der zu demselben oder auch zu einem anderen Auftrag gehört. Hier wird derjenige Sammelbehälter des Geräts in die Beladeposition gebracht, der diesem Auftrag zugeordnet ist. Nur wenn es sich um denselben Auftrag handelt, wie beim vorhergehenden Absammeln, so wird derselbe Sammelbehälter mit diesem Artikel in einer vorbestimmten Anzahl gefüllt, weil, wie erwähnt, die Sammelbehälter auftragsgebunden gefüllt werden. Bei einer einzigen Fahrt längs des Hochregals, gegebenenfalls bei einer einzigen Hin- und Rückfahrt längs des Hochregals, werden in der beschriebenen Art und Weise alle Artikel aller hierbei vorkommenden Aufträge in entsprechend zugeordnete Sammelbehälter abgesammelt. Nach Beendigung der Fahrt längs des Hochregals werden die dann auftragsgebunden befüllten Sammelbehälter in eine entsprechende Anzahl von diesen Aufträgen zugeordneten Kommissionierbehältern entleert, die dann in einem der nächsten Gänge des Lagers in entsprechender Weise komplettiert werden, oder die direkt zur Versandstation gelangen, falls der Auftrag bereits komplett abgesammelt ist.

- 4 -

Wenn an beiden Enden des Ganges jeweils mehrere Kommissionierbehälter auf entsprechenden Förderbahnen vorhanden sind, kann das Kommissioniergerät bei einer Hinfahrt alle Aufträge für die an dem einen Ende des Ganges vorhandenen Kommissionierbehälter absammeln und bei der Rückfahrt alle Aufträge für diejenigen Kommissionierbehälter absammeln, die am anderen Ende des Ganges sich befinden, usw. .

Aus diesem Grunde wird es bevorzugt, wenn nach Anspruch 2 an beiden Enden des Ganges an diametral einander gegenüberliegenden Stellen Speicherplätze für die Kommissionierbehälter vorgesehen sind, die dann in einander entgegengesetzten Richtungen längs des Ganges gefördert werden können.

Nach Anspruch 3 wird es bevorzugt, wenn die längs der Gänge verlaufenden Förderbahnen in ihnen gemeinsame Bahnen einmünden, die an den Stirnseiten der Hochregale vorbeigeführt sind. Diese fördern sowohl die leeren Kommissionierbehälter zu den Gängen, wie auch anschließend die gefüllten Kommissionierbehälter weiter zu einer Verpackungsstation, gegebenenfalls über die weiteren Gänge, in denen der betreffende Auftrag vervollständigt wird.

Das Absammeln der betreffenden Artikel in den Sammelbehälter des Kommissioniergeräts kann sowohl automatisch erfolgen, wie auch von Hand. Einen entsprechenden Automaten beschreibt beispielsweise die DE-AS 2 601 027. In beiden Fällen kann eine Kontrolle vorgesehen sein, die sicherstellt, daß die betreffende Bedienungsperson bzw. der Automat die richtige Anzahl der Artikel dem Hochregal entnommen und in den betreffenden Sammelbehälter übergeben hat. Nachdem dem Rechner ohnedies alle Daten

- 5 -

der abzusammelnden Aufträge eingegeben sind, können diese Informationen im Rechner auch für diese Kontrolle verwendet werden. Hierfür wird es bevorzugt, wenn eine am Kommissioniergerät vorgesehene Waage das Gewicht der in einem der Sammelbehälter kommissionierten Artikel eines Auftrags wiegt (Ist-Gewicht) und mit dem zu erwartenden Gewicht (Soll-Gewicht) des Auftrags vergleicht, welches Soll-Gewicht der Waage vom Rechner übermittelt wird. Die Waage bzw. der Rechner oder ein an die Waage direkt angeschlossener Kleinrechner vergleicht dann das Ist-Gewicht mit dem Soll-Gewicht. Liegt die Differenz innerhalb vorgegebener Grenzen, so ist die richtige Anzahl des betreffenden Artikels in den zugeordneten Sammelbehälter eingesammelt worden. Liegt die Differenz über einem vorgegebenen Wert, so sind entweder zu wenige oder zu viele Artikel in dem Sammelbehälter eingesammelt worden und der Fehler muß beseitigt werden, entweder indem die zuviel eingesammelten Artikel zurückgegeben oder die zu wenig eingesammelten Artikel in den Sammelbehälter eingelegt werden. Auch dies kann natürlich ein Automat übernehmen.

Das neuartige Kommissioniergerät ist erfindungsgemäß dadurch gekennzeichnet, daß es wenigstens eine Be- und Entladeposition für Sammelbehälter hat, die an der Be- und Entladeposition vorbei längs einer endlosen Bahn gesteuert und motorgetrieben verschiebbar sind.

Hierzu können die Sammelbehälter an einer endlosen, horizontalen Umlaufkette geführt sein.

Bevorzugt wird es außerdem, wenn am Kommissioniergerät im Bereich jeder Be- und Entladeposition ein vertikaler Stab befestigt ist, an dem übereinander mehrere optische Anzeigen vorgesehen sind. Diese Anzeigen können die genaue Höhenlage des jeweils abzusammelnden Artikels angeben, deren Anzahl sowie andere beim Absammeln der Artikel wichtige Informationen.

Die Erfindung wird im folgenden anhand eines Ausführungsbeispiels näher erläutert, aus dem sich weitere wichtige Merkmale ergeben. Es zeigt:

Fig. 1   schematisch eine Draufsicht auf ein Warenlager mit mehreren Hochregalen und Kommissioniergeräten, sowie Förderbändern zur Erläuterung des Arbeitsprinzips der Erfindung;

Fig. 2   vergrößert eine schematische Draufsicht auf die wesentlichen Bestandteile des Arbeitsplatzes des dabei verwendeten Kommissioniergerätes;

Fig. 3   schematisch eine Seitenansicht von Fig. 2.

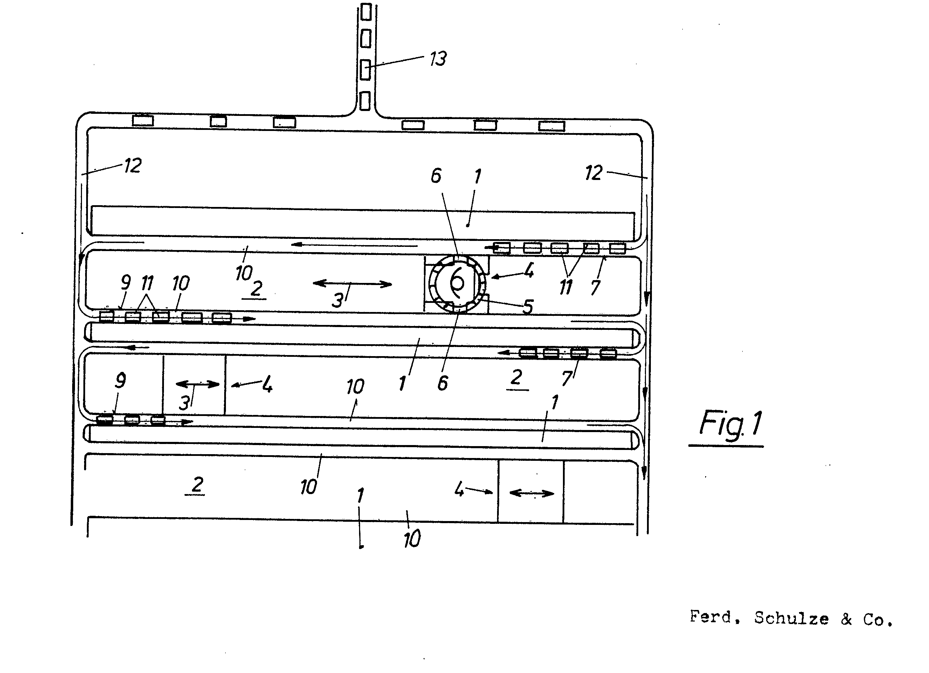

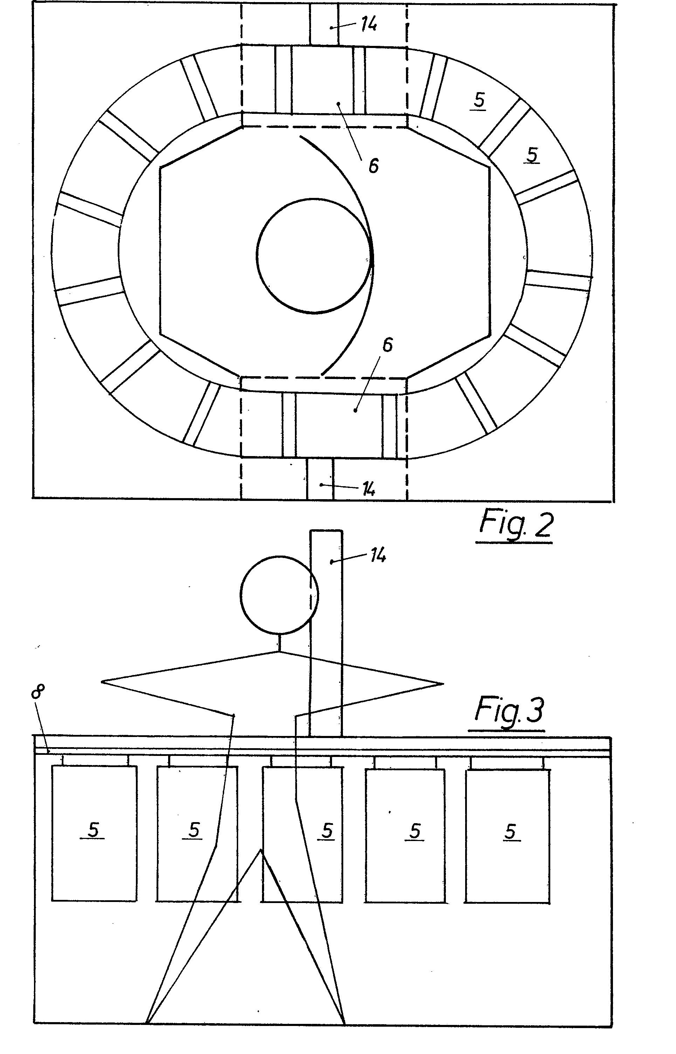

Zunächst sei anhand von Fig. 1 der grundsätzliche Aufbau der neuartigen Anordnung erläutert. Dort ist ein Warenlager gezeigt, das aus mehreren Hochregalen 1 besteht, die zwischen sich Gänge ausbilden. In diesen Gängen sind in Richtung der Doppelpfeile 3 Kommissioniergeräte hin- und herverfahrbar angeordnet, und zwar vorzugsweise schienengebunden. Die Kommissioniergeräte haben einen in der Höhe einstellbar verfahrbaren Arbeitsplatz, der in den Figuren 2 und 3 im einzelnen gezeigt ist. Auf diese Weise kann jede Koordinate jedes Hochregals vom Arbeitsplatz des Geräts 4 angefahren werden, wobei jedes Gerät seinen Gang versorgt.

Die bisher beschriebene Anordnung ist üblich.

- 7 -

Erfindungsgemäß hat jedes Gerät mehrere Sammelbehälter 5, die auf einer horizontalen Kreisbahn motorgetrieben verschoben werden können. Die Sammelbehälter 5 sind hierzu in etwa kreisförmigen Führungsschienen 8 aufgehängt.

Der Arbeitsplatz weist zwei einander gegenüberliegende Be- und Entladepositionen 6 auf, die dem jeweiligen Hochregal 1 direkt gegenüberliegen.

Zum Entladen der Sammelbehälter 5 können diese jeweils einen ausschiebbaren Boden haben, oder sie werden als Ganzes gekippt.

An beiden Enden jedes Ganges sind einander diametral gegenüberliegend Abgabestationen 7 und 9 für die Sammelbehälter 5 vorgesehen. Diese werden mit Förderbändern 10 beschickt, auf denen Kommissionierbehälter 11 transportiert werden, und zwar an jedem Gang in jeweils gegeneinander gerichteten Richtungen, wie durch die Pfeile angedeutet.

Die Kommissionierbehälter 11 werden über ein gemeinsames Förderband 13 zum Warenlager gefördert und dann über eine Schiene alternierend nach rechts und links gegeben, wo sie auf Förderbänder 12 in Pfeilrichtung weiter transportiert werden, bis sie an einen der Gänge 2 gelangen. Dort werden sie durch die Förderbänder 10 in die jeweiligen Gänge eingeschleust und nehmen dort zunächst ihre Warteposition Nr. 7 oder Nr. 9 ein.

Das Absammeln mehrerer Warensendungen geschieht jetzt wie folgt: Das betreffende Kommissioniergerät 4 befindet sich zu Anfang am rechten oder linken Ende des Ganges 2. Im folgenden sei angenommen, daß es sich am rechten Ende, d.h. bei der Station 7 befindet. Ein Rechner hat vorher einem am Gerät 4 befindlichen Mikroprozessor die Daten für diejenigen Warensendungen eingegeben, die das be-

- 8 -

treffende Gerät 4 in seinem Gang 2 einsammeln kann. Das Gerät 4 wird mit seinem Arbeitsplatz und der Station 6 jetzt an den betreffenden Vorratsbehälter des betreffenden Hochregals (rechtes oder linkes Hochregal des betreffenden Ganges) gebracht. Dort wird die entsprechende Anzahl der aus dem Vorratsbehälter zu entnehmenden Waren über einen Leuchtstab 14 angezeigt, und ein Automat oder eine Bedienungsperson entnimmt die Artikel aus dem Vorratsbehälter und legt die Artikel in einen bestimmten der Sammelbehälter 5 ein, der vom Rechner bzw. Mikroprozessor gesteuert vorher an die betreffende rechte oder linke Position 6 gebracht worden war. Jetzt fährt das Gerät in Richtung auf das linke Ende 9 des Ganges weiter, wobei es bei dieser Fahrt immer dann anhält, wenn aus dem rechten oder linken Hochregal Artikel entnommen werden sollen. Gleichzeitig wird die Höhe des Arbeitsplatzes, ebenfalls vom Rechner gesteuert, entsprechend eingestellt. Auf diese Weise werden unter Optimierung des vom Gerät 4 zurückzulegenden Weges verschiedene Sammelbehälter 5 mit den ihnen zugeordneten Waren in der jeweils gewünschten Anzahl gefüllt. Optimierung bedeutet dabei, daß zur Zusammenstellung mehrerer Warensendungen mit den von diesem Gang aus erreichbaren Artikeln das Gerät 4 den Gang in einer Richtung nur einmal befahren muß. Dies ist möglich, weil der Rechner sowohl die x-y-Koordinate des Arbeitsplatzes steuert, wie auch die Zuordnung des betreffenden Sammelbehälters 5 zur jeweiligen Kommission.

Ist das Gerät 4 am linken Ende bei der Station 9 angelangt, so werden die einzelnen gefüllten Sammelbehälter 5 in ihnen jeweils zugeordneten Kommissionierbehälter 11 entladen. Es sind also wenigstens so viele Sammelbehälter 5 vorgesehen, wie Kommissionierbehälter 11 an den Enden des Ganges Platz haben. Es können aber auch mehr Sammelbehälter 5 am Arbeitsplatz vorhanden sein.

Ebenfalls vom Rechner gesteuert werden dann die gefüllten Kommissionierbehälter 11 in Richtung der Pfeile zum gemeinsamen Förderband 12 transportiert und von dort zu einer Verpackungsstation.

Anschließend kann das Gerät 4 den Vorgang wiederholen, so daß bei einer Fahrt von der linken Station 9 zur rechten Station 7 wieder mehrere Warensendungen zusammengestellt werden. An einem Arbeitsplatz haben wenigstens zehn Sammelbehälter 5 Platz, so daß wenigstens zehn Warensendungen mit einer einzigen Fahrt zusammengestellt werden können.

Natürlich ist es auch möglich, daß das Gerät 4 bei einer einzigen Hin- und Rückfahrt entsprechend viele Warensendungen zusammenstellt, wobei dann eine der Stationen 7 oder 9 zum Fortfall kommt.

Eine Waage, mit der das Gesamtgewicht der für einen bestimmten der Sammelbehälter 5 abgesammelten Artikel gewogen wird, kann beispielsweise bei einer der Positionen 6 in Figur 2 vorgesehen sein. Diese Waage ist an den Rechner angeschlossen. Sie wiegt das Gewicht der auftragsgebunden in diesen Sammelbehälter 5 eingesammelten Artikel und vergleicht dieses Ist-Gewicht nach Abzug des ihr bekannten Leer-Gewichts des Sammelbehälters 5 mit dem Soll-Gewicht, das ihr vom Rechner mitgeteilt wurde. Dadurch ist eine Kontrolle möglich, ob die jeweils richtige Anzahl der Artikel in den Sammelbehälter 5 eingegeben wurde.

Patentansprüche :

1. Verfahren zum Zusammenstellen von Warensendungen aus in Vorratsbehältern in einem Hochregal (1) aufbewahrten Artikeln mittels eines in einem Gang vor dem Hochregal (1) fahrbaren Regal-Kommissioniergerätes mit einem Arbeitsplatz, dessen von den zu entladenden oder aufzunehmenden Artikeln abhängige Positionierung im Gang und in der Höhenpositionierung des Arbeitsplatzes von einem mit entsprechenden Informationen versehenen Rechner gesteuert wird,
dadurch gekennzeichnet,
daß das Regal-Kommissioniergerät bei einer einzigen Hin- oder Hin- und Rückfahrt längs des Hochregals (1) alle in diesem Hochregal (1) befindlichen Artikel mehrerer Aufträge absammelt, wobei die Steuerung des Gerätes zusätzlich zur Gang- und Höhenpositionierung des Arbeitsplatzes des Gerätes jeweils einen von mehreren Sammelbehältern (5) des Gerätes auftragsgebunden an eine Beladeposition (6) des Gerätes bringt und die dadurch auftragsgebunden mit den Artikeln dieses Hochregals gefüllten Sammelbehälter (5) nach Beendigung der Fahrt des Gerätes durch den Gang (2) in eine entsprechende Anzahl von ebenfalls auftragsgebunden befüllten Kommissionierbehältern (11) entleert werden.

2. Verfahren nach Anspruch 1,
dadurch gekennzeichnet,
daß bei zwei durch einen Gang (2) voneinander getrennten Hochregalen (1) die Kommissionierbehälter (11) längs des Ganges (2) von beiden Enden her längs zweier Förderbahnen (10) in einander entgegengesetzten Richtungen zu Übergabestationen (7, 9) transportiert werden, wobei jeweils eine Förderbahn an einem der Hochregale verläuft.

3. Verfahren nach Anspruch 2,

d a d u r c h  g e k e n n z e i c h n e t ,

daß die Förderbahnen (10) in ihnen gemeinsamen
Bahnen (12) einmünden, die an den Stirnseiten der
Hochregale (1) vorbeigeführt sind.


4. Verfahren nach einem der Ansprüche 1 bis 3,

d a d u r c h  g e k e n n z e i c h n e t ,

daß eine am Kommissioniergerät vorgesehene Waage das
Gewicht der in einem der Sammelbehälter (5)
kommissionierten Artikel eines Auftrages wiegt
(Ist-Gewicht) und mit dem zu erwartenden Gewicht
(Soll-Gewicht) des Auftrags vergleicht, welches
Soll-Gewicht ihr vom Rechner übermittelt wird.


5. Kommissioniergerät zur Durchführung des Verfahrens
nach einem der Ansprüche 1 bis 4,

d a d u r c h  g e k e n n z e i c h n e t ,

daß es wenigstens eine Be- und Entladeposition (6)
für Sammelbehälter (5) hat, die an der Be- und
Entladeposition (6) vorbei längs einer endlosen
Bahn (8) gesteuert und motorgetrieben verschiebbar
sind.


6. Kommissioniergerät nach Anspruch 5,

d a d u r c h  g e k e n n z e i c h n e t ,

daß die Sammelbehälter (5) an einer endlosen,
horizontalen Umlaufkette (8) geführt sind.


7. Kommissioniergerät zur Durchführung des Verfahrens
nach Anspruch 5 oder 6,

d a d u r c h  g e k e n n z e i c h n e t ,

daß an ihm im Bereich jeder Be- und Entladeposition (6)
ein vertikaler Stab (14) befestigt ist, an dem übereinander mehrere optische Anzeigen vorgesehen sind.

*Fig.1*

1/2

0048832

0048832

Fig. 2

Fig. 3

Ferd. Schulze & Co.